# EUROPEAN PATENT SPECIFICATION

(11) **EP 3 140 055 B1**
(45) Date of publication and mention of the grant of the patent: **27.11.2019**
(21) Application number: 15724082.1
(22) Date of filing: 27.04.2015
(51) Int. Cl.: C04B 18/02, B09B 3/00

(54) **A METHOD OF DISPOSAL AND UTILISATION OF DUSTS FROM AN INCINERATION INSTALLATION AND SLUDGE FROM FLOTATION ENRICHMENT OF NON-FERROUS METAL ORES CONTAINING HAZARDOUS SUBSTANCES IN THE PROCESS OF LIGHT AGGREGATE PRODUCTION FOR THE CONSTRUCTION INDUSTRY**
VERFAHREN ZUR ENTSORGUNG UND NUTZBARMACHUNG VON STAUB AUS EINER MÜLLVERBRENNUNGSANLAGE UND SCHLAMM AUS DER FLOTATIONSANREICHERUNG VON SCHADSTOFFHALTIGEN EISENFREIEN METALLERZEN ZUR LICHTAGGREGATHERSTELLUNG FÜR DIE BAUINDUSTRIE
PROCÉDÉ D'ÉLIMINATION ET D'UTILISATION DE POUSSIÈRES PROVENANT D'UNE INSTALLATION D'INCINÉRATION ET DE BOUE PROVENANT D'ENRICHISSEMENT PAR FLOTTATION DE MINERAIS MÉTALLIQUES NON FERREUX CONTENANT DES SUBSTANCES DANGEREUSES DANS LE PROCÉDÉ DE PRODUCTION D'AGRÉGAT LÉGER POUR L'INDUSTRIE DE LA CONSTRUCTION

(30) Priority: 09.05.2014 PL 40816514
(43) Date of publication of application: 15.03.2017
(73) Proprietor: N.T.I. Sp. z.o.o. Nowoczesne Techniki Instalacyjne, 67-200 Glogów (PL); Instytut Mechanizacji Budownictwa I Górnictwa Skalnego, 02-673 Warszawa (PL)
(72) Inventor: WÓJCIK, Andrzej, PL-67-200 Ruszowice (PL); WÓJCIK, Jakub, PL-58-540 Karpacz (PL); PIOTROWSKI, Rafal, PL-67-200 Glogów (PL); UZUNOW, Elzbieta, PL-05-083 Topolin (PL); KUKIELSKA, Barbara, PL-02-703 Warszawa (PL); STANKIEWICZ, Jaroslaw, PL-04-497 Warszawa (PL); GÓRALCZYK, Stefan, PL-02-776 Warszawa (PL)
(74) Representative: Przykorski, Andrzej
(86) International application number: PCT/PL2015/000070
(87) International publication number: WO 2015/170999

(56) References cited:
- WO-A1-2011/149368
- CA-A1- 2 844 052
- US-A- 5 286 427

## Description

The present invention is directed to a method of disposal and utilisation of fine mineral hazardous waste containing toxic metal compounds, such as ashes from the incineration installation and sludge from flotation processes in the non-ferrous metal ore mining, owing to the production of lightweight aggregate in the process of thermal synthesis solely from waste materials, both industrial and municipal, including materials from rock mining, whereby the obtained lightweight aggregate is used in the construction industry.

The amount of the generated fine mineral waste containing toxic metal contaminants is increasing continuously, whereby their main producer is the non-ferrous metal ore extraction industry, but also the increasingly common waste incinerators. The aforementioned wastes are a major environmental problem in all industrialised countries. Fine-grained mineral waste contaminated with toxic metal compounds are classified as hazardous and their utilisation is mainly based on their storage in special facilities, but they are used sporadically. Landfills are expensive to build, require stabilisation of waste before depositing it and continuous monitoring, and they pose a threat to the environment due to the presence of toxic metal compounds in the flowing effluents. Wastes containing toxic metal compounds cannot be applied in non-stabilised form in the production of commonly used construction products due to the leaching of those compounds from the products. Attempts are being made to solve these problems by waste management in a way that is not hazardous to the environment and human health, especially through the stabilisation of toxic metal compounds in the form of poorly soluble compounds or the removal of toxic metal compounds from the mineral waste through their selective dissolution.

The USA patent No. US7,204,660 B2 presents the process of detoxification of mining waste containing heavy metals by mixing them with mineral material containing 20 to 45% of humic acids and an addition of alkaline compounds in the amount of 1.0 to 7.5% to obtain the pH of 6.5-8.0 during the homogenisation with water with a temperature of 95°C. The described method allows for the remediation of the contaminated sites and facilities for depositing hazardous waste. The USA patent No. US8,323,509 B2, in turn, describes the process of reclamation of landfills by the addition of a water-soluble polymer generated from one or more ethylenically unsaturated monomers or water-soluble polymers, whereby the plant growth in the reclaimed area is possible as a result of the reclamation. The Polish patent No. PL186766 B1 describes the method of building landfills for hazardous waste from the flotation of zinc and lead ores containing heavy metals, based on the application of dolomite waste as a chemically and/or chemically and physically active substrate binding metal ions, owing to ensuring pH 7-9 and the filtration rate of less 10⁻⁵ m/sec. Another process for hazardous waste disposal, especially those containing heavy metals, known from the description of the Polish patent No. PL188429 B1, is based on the dissolution of the waste with the use of nitric acid, and then the application of electrochemical decomposition and neutralisation to the form of effluent which can be discharged to the wastewater system. Another USA patent No. US5,391,597 A describes the process of producing mining waste composition consisting of cement and acrylamide Mannic polymers, intended for use in mines for underground floor backfills with the required strength. A process for producing cellular concrete blocks with the use of non-toxic waste from copper ore mining is presented in the description of the USA patent No. US5,286,427 A. The process involves a partial replacement of the silica sand with mining waste containing at least 40% of silica by weight, the exact measurement and mixture of the batch in such a way as to ensure the required percentage content of particular components, necessary to produce cellular concrete blocks and the implementation of the block production process in an autoclave. The resulting product can be used as a construction material, provided that the leachability of toxic metal compounds does not pose a threat to the environment. The international publication No. WO2011149368 A1 presents the method of production of a polymeric construction material involving waste from the copper ore flotation, based on mixing the flotation waste in the amount of 10-50% by weight with the addition of 20-50% by weight of waste sulphur, waste phosphogypsum as a pH regulator in the amount of 3-25% by weight and 10-40% by weight of the mineral filler and then sulphur in the temperature of 130-150°C, in which the sulphur reacts intensively with such metals as: copper, lead, zinc, nickel, and trace elements, such as: iron, arsenic, cadmium, molybdenum, cobalt and vanadium, forming a copolymer having the characteristics of a macromolecular compound. The resulting polymer construction material can be poured onto a mould or cast onto a defined area, mainly for road substructures used in place of the applied cement-based concrete or it can be used for the production of road paving mixture. The Canadian patent No. CA2844052 A1 solves the problem of how to obtain the light-weight construction material from the waste mixture formed by mixing the sewage sludge and at least one waste from the group consisting of remicon sludge, waste foundery sand, asbestos and discarded power plant ash or by adding to remicon sludge at least one type of waste from the group consisting of incinerator residue, grinding stone residue, waste foundry sand, discarded asbestos, steel dust and power plant ash and additives selected from the group consisting of feldspar, bentonite, zeolite, loess, mica and agalmonite and then forming light-weight construction material in the calcine furnace at 1100-1200°C, in which organic and inorganic hazardous components present in wastes are converted into non-toxic compounds. Calcine process is carried out without the involvement of other flux. The Polish patent No. PL210921 B1 solves the problem of how to obtain lightweight aggregate from municipal and industrial waste, where after the pre-mixing of waste solids, and then granulation of the mixture, lightweight aggregate is obtained at the final stage after sintering the resulting granules. Unfortunately, the presented method does not allow for the application of mineral wastes other than natural silica with the content of 95% of SiO₂, the natural resources of which are increasingly limited.

The purpose of the present invention is an economical neutralisation and disposal of environmentally harmful fine-grain mineral waste, containing silica as the main component and contaminated with inorganic toxic metal compounds, especially heavy metals, present in the form of sludge after the flotation of non-ferrous metal ores and/or ashes from waste incineration installations, whereby the aforementioned waste is applied as a substitute of natural raw materials, and more particularly, silica dusts from rock mining, applied in connection with municipal wastewater sludge and used or waste glass, to produce full-value lightweight aggregate for the construction industry, in which the toxic metal compounds are permanently stabilised in the crystalline silicate structure.

Surprisingly, it turned out that the artificial lightweight aggregate with the properties meeting the requirements concerning commonly used construction materials can be obtained using a substitute in the form of natural silica dust and hazardous mineral waste with a very fine particle size, containing silica as the main component, contaminated with inorganic toxic metal compounds. The choice of such a raw material was made based on the content of silica as the main component of the waste, whose properties result in the creation of a new polycrystalline structure during a thermal synthesis reaction, which incorporates inorganic metal compounds in a durable and unleachable way in the usage conditions. In accordance with the invention, the method of disposal and utilisation of dusts from an incineration plant and sludge from the enrichment of non-ferrous metal ores containing hazardous substances, in the production process of a lightweight aggregate for the construction industry, where the produced aggregate is created in the process of solid state reaction, of a fine grain natural silica which is the waste generated during the rinsing of sand for the construction industry with the aforementioned dusts and/or sludge also containing silica as the main component and classified as hazardous waste, is based on the following: the dusts from the incineration installation and/or sludge from flotation enrichment of non-ferrous metal ores with the fraction of 0 to 0.2 mm are mixed with fine grain natural silica with the fraction from 0 to 0.063 mm, wherein the content of hazardous waste in the mixture is from 5 to 100%, and then the resulting product in the amount of 30 to 70% is mixed with particulate glass waste in the form of dust with the fraction of 0 to 0.2 mm in the amount of 2 to 15% and waste sludge from wastewater treatment plants with the content of 15 to 50% of combustible components and/or sludge after the flotation of coal with the content of up to 32% of coal in the amount of 30 to 70%, and the resulting mixture in the form of a thick paste is granulated to form granules with a fraction from 2 to 20 mm, which after drying subsequently heat treatment in a temperature from 1000 to 1200°C take place, wherein this process is carried out within 0.5-2 hours, till the moment of incorporation of the hazardous substances into the polycrystalline structure of the sinter with the properties of a lightweight aggregate. Preferably, the waste in the form of fine-grain dusts from the incineration plants and/or sludge from non-ferrous metal ore enrichment, fine grain natural silica, and glass dust having a water content of up to 5% are premixed and then wastewater sludge and/or sludge from the flotation of coal having a water content from 50 to 85%, and the whole mixture is stirred till a homogenous mixture for forming granulate is obtained. Hazardous substances from hazardous waste are stabilised as a result of solid state reaction on the obtained lightweight aggregate in the form of solid silicate compounds. Sintering of the dried granules is performed in a rotary kiln equipped with a system of post-reaction gas purification, whereby the combustible components of wastewater sludge are burned out at the stage of sintering, generating gases which cause the formation of pores in the granules. The basic component of the obtained aggregate in the form of a fine-grained silica in the process of thermal synthesis creates a new, polycrystalline structure, both with mineral components occurring with the silica in non-ferrous metal ore flotation waste and/or in dusts from the waste incineration plants, and with common metal and heavy metal compounds. Compounds that are unstable in the environment, such as sulphide compounds, undergo conversion in the process of aggregate sintering and the generated gases cause the formation of pores in the aggregate, owing to which the obtained aggregate is lightweight, whereas the volatile substances separated as a result of decomposition of particular wastes are directed to a treatment installation consisting of adsorbents of acidic vapours, dioxins, nitrogen oxides and dusts.

### Example 1

The following components have been used in the aggregate production:
- component A in the form of copper flotation sludge in a fraction of <0.1 mm with the content of SiO₂ - 57.3%, and other contaminants: CaO - 11.9%; MgO - 4.23%; Al₂O₃ - 4.17%; Cu - 0.15%; Pb - 0.07%; As - 50 ppm; Co - 62 ppm; S - 0.9% Fe - 0.82%, classified within the category of mining waste to be stored in Category A facilities due to the content of toxic metals As, Cu, Co and S which is higher than the permissible value for neutral mining waste, as well as high fineness;
- component B in the form of waste chalcedony with the consistency of a dust with the fraction of up to 0.063 mm, 98.7% silica content and other contaminants: Al₂O₃ - 0.2% and CaO - 0.1%;
- component C in the form of ground waste glass from the production of automotive bulbs with a fraction of up to 0.2 mm;
- component D in the form of sewage sludge from a municipal wastewater treatment plant, stabilised, after the filter press, with a dry matter content of 21%, having contaminants expressed in mg/kg of dried weight: chromium - 100, zinc - 1850, cadmium - 2.1, magnesium - 0.8, copper - 35, nickel - 10, mercury - 1.01, lead - 88, calcium - 4.6;

Waste - sludge after flotation constituting component A, chalcedony constituting component B and glass dust constituting component C - weighed in the proportion of 4:4:2 were placed in a mixing vessel and mixed for 30 minutes, and then waste sludge D was added to the mixing vessel in an amount equal by weight to the weight of the mixed waste A+B+C. The whole mixture was homogenised by mixing it for 30 minutes. Granules were formed from the resulting mass with a diameter of 15 ±5 mm, which were then dried in a drier and placed in a horizontal rotary kiln, whereby the kiln was connected to the exhaust purification system. The kiln of continuous operation was characterised by the following heating zones: 700°C, 1000°C and 1150°C, whereby the 700°C zone is the place of occurrence of evaporation of volatiles and burning of flammable substances with the use of air, the zone of up to 1000°C is the place of occurrence of a thermal decomposition of carbonate and sulphide compounds, and the zone of up to 1150°C is the place of creation of a polycrystalline silicate structure and the formation of metal silicates. The finished sinter with the properties of a lightweight aggregate was removed continuously from the sintering zone and cooled in a cooler equipped with a heat exchanger. Exhaust gases containing the products of thermal decomposition of waste were cooled to a temperature of about 200°C and purified using a bag filter, a dry absorber of acidic oxides and a catalytic adsorber of nitrogen oxides, and released to the atmosphere after the control of gas composition. The end product of the process is a lightweight aggregate with a grain size of 10-20 mm, meeting the requirements of PN-EN standards, with a bulk density in loose state of 550 kg/m³, water absorption of 27%, frost resistance of ≤ 1.06%, for use primarily in an unbound form as a construction material for light road embankments, backfills of retaining structures and engineering structures, road and auxiliary substructures, insulation and drainage in the soil, green roofs and in the bound form for the production of blocks with increased sound absorption and thermal insulation.

### Example 2

The following components have been used in the aggregate production:
- component A in the form of dusts from the municipal waste incineration plants, with a content of 81.5% of mineral components, including: 32.2% SiO₂, 0.8% TiO₂, 17.3% Al₂O₃, 15,5% CaO, 2.9% MgO, 0.8% Na₂O, 1.34% K₂O, 7.8% Fe₂O₃, 4,3% P₂O₅, 16.4% losses of ignition - LOI, contaminated with solid metal compounds, wherein the content of the selected elements expressed in µ/g is: antimony - 50, arsenic - 30, zinc - 20000, tin - 550, cadmium -120, lead - 8300, mercury <1, thallium <0.5;
- component B in the form of natural silica waste with the consistency of dust with a fraction of up to 0.063 mm;
- component C in the form of ground waste glass from the production of automotive bulbs with a fraction of up to 0.2 mm;
- component D in the form of sewage sludge from a municipal wastewater treatment plant, stabilised, after the separator, with a dry matter content of 25,6%, having contaminants expressed in mg/kg of dried weight: chromium - 112; zinc - 15.60; cadmium - 2.6; magnesium - 0.4; copper - 54; nickel - 104; mercury - 1.41; lead - 107 and calcium - 5.3.

Waste - dusts from a municipal waste incineration plant constituting component A, chalcedony constituting component B and glass dust constituting component C - weighed in the proportion of 1:7:2 were placed in a mixing vessel and mixed for 30 minutes, and then waste sludge D was added to the mixing vessel in an amount equal by weight to the weight of the mixed waste A+B+C. The whole mixture was homogenised by mixing it for 30 minutes. Granules were formed from the resulting mass with a diameter of 3 ±1 mm from the resulting mass with a consistency of clay, which were then dried in a drier and placed in a horizontal rotary kiln, whereby the kiln was connected to the exhaust purification system. The kiln of continuous operation was characterised by the following heating zones: 700°C, 1000°C and 1150°C, whereby the 700°C zone is the place of occurrence of evaporation of volatiles and burning of flammable substances with the use of air, the zone of up to 1000°C is the place of occurrence of a thermal decomposition of carbonate and sulphide compounds and the zone of up to 1150°C is the place of creation of a polycrystalline silicate structure and the formation of metal silicates. The finished sinter with the properties of a lightweight aggregate was removed continuously from the sintering zone and cooled in a cooler equipped with a heat exchanger. Exhaust gases containing the products of thermal decomposition of waste were cooled to a temperature of about 200°C and purified using a bag filter, a dry absorber of acidic oxides and a catalytic adsorber of nitrogen oxides, and released to the atmosphere after the control of gas composition. The end product of the process is a lightweight aggregate with a grain size of 2-4 mm, meeting the requirements of PN-EN standards, with a bulk density in loose state of 600 kg/m³, water absorption of 29%, frost resistance of ≤ 1.06%, to be used primarily in a bound form as a construction material for the production of concrete blocks with improved sound absorption, thermal insulation and reduced weight.

## Claims

1. A method of disposal and utilisation of dusts from the incineration installation containing hazardous substances, in the process of light aggregate production for the construction industry, whereby the produced aggregate is generated in the process of solid state reaction of a fine grain natural silica which is the waste generated during the rinsing of sand for the construction industry with the aforementioned dusts containing silica as the main component and qualified as hazardous waste, wherein the fraction of dust from the combustion installation which is less or equal to 0,2 mm is mixed with the fraction of fine grain natural silica which is less or equal to 0,063 mm, whereby the contents of hazardous waste in the mixture is from 5 to 100%, and then the resulting product in an amount of 30 to 70% is mixed with particulate glass waste in the form of dust of less or equal to 0,2 mm in an amount of 2 to 15% and waste sludge from wastewater treatment plants with a content of 15 to 50% of combustible components and/or sludge from coal flotation containing up 32% of coal, in an amount of 30 to 70%, and the resulting mixture in the form of a thick paste is granulated to form granules with a length ranging from 2 to 20 mm, which are then dried and subsequently undergo a heat treatment at a temperature ranging from 1000 to 1200°C for a time between 0,5 to 2 hours, until the stabilization of the hazardous substances by incorporation into the polycrystalline structure of the sinter with the properties of a lightweight aggregate.

2. The method of claim 1, wherein the wastes in the form of fine dusts from the combustion installation, silica dust and glass dust having a water content up to 5% are pre-mixed, and then waste sludge and/or sludge from coal flotation having a water content from 50 to 85% is added, and all the components are mixed until a homogeneous mixture for forming granulate is obtained.

3. The method of claim 1 or 3, wherein the hazardous substances from hazardous waste are stabilised as a result of solid state reaction in the resulting light aggregate in the form of stable silicate compounds.

4. The method of claim 1 or 2, wherein the combustible components of sewage sludge and/or sludge after the flotation of coal burn out during the sintering stage producing gases which cause the formation of pores in the granules.

5. The method of claim 4, wherein the sintering of dried granules is performed in a rotary kiln equipped with a cleaning system for reaction gases.

6. A method of disposal and utilisation of sludge from flotation enrichment of non-ferrous metal ores containing hazardous substances, in the process of light aggregate production for the construction industry, whereby the produced aggregate is generated in the process of solid state reaction of a fine grain natural silica which is the waste generated during the rinsing of sand for the construction industry with the aforementioned sludge also containing silica as the main component and qualified as hazardous waste, wherein the sludge from flotation enrichment of non-ferrous metal ores fraction of less or equal to 0,2mm are mixed with fine grain natural silica fraction of less or equal to 0,063mm, whereby the contents of hazardous waste in the mixture is from 5 to 100%, and then the resulting product in an amount of 30 to 70% is mixed with particulate glass waste in the form of dust of less or equal to 0,2mm in an amount of 2 to 15% and waste sludge from waste-water treatment plants with a content of 15 to 50% of combustible components and/or sludge from coal flotation containing up 32% of coal, in an amount of 30 to 70%, and the resulting mixture in the form of a thick paste is granulated to form granules with a length ranging from 2 to 20 mm, which are then dried and subsequently undergo a heat treatment at a temperature ranging from 1000 to 1200°C for a time between 0,5 to 2 hours, until the stabilization of the hazardous substances by incorporation into the polycrystalline structure of the sinter with the properties of a lightweight aggregate.

7. The method of claim 6, wherein the wastes in the form of sludge from the flotation enrichment of non-ferrous metal ores, silica dust and glass dust having a water content up to 5% are pre-mixed, and then waste sludge and/or sludge from coal flotation having a water content from 50 to 85% is added, and all the components are mixed until a homogeneous mixture for forming granulate is obtained.

8. The method of claim 6 or 7, wherein the hazardous substances from hazardous waste are stabilised as a result of solid state reaction in the resulting light aggregate in the form of stable silicate compounds.

9. The method of claim 6 or 7, wherein the combustible components of sewage sludge and/or sludge after the flotation of coal burn out during the sintering stage producing gases which cause the formation of pores in the granules.

10. The method of claim 9, wherein the sintering of dried granules is performed in a rotary kiln equipped with a cleaning system for reaction gases.

## Patentansprüche

1. Ein Verfahren zur Entsorgung und Verwertung von Stäuben aus der Verbrennungsanlage, die gefährliche Stoffe enthalten, im Prozess der Herstellung von Leichtzuschlagstoffen für die Bauindustrie, wobei der erzeugte Zuschlagstoff im Prozess der Feststoffreaktion einer feinkörnigen natürlichen Kieselsäure erzeugt wird, die ein Abfall ist, der bei der Spülung von Sand für die Bauindustrie mit den vorgenannten Stäuben erzeugt wird, die Kieselsäure als Hauptkomponente enthalten und als gefährlicher Abfall qualifiziert sind, wobei der Staubanteil aus der Verbrennungsanlage, der kleiner oder gleich 0,2 mm ist, mit dem Anteil der feinkörnigen natürlichen Kieselsäure vermischt wird, der kleiner oder gleich 0,063 mm ist,
wobei der Anteil der gefährlichen Abfälle in dem Gemisch 5 bis 100% beträgt, und dann das resultierende Produkt in einer Menge von 30 bis 70% mit teilchenförmigem Glasabfall in Form von Staub von weniger oder gleich 0,2 mm in einer Menge von 2 bis 15% und Klärschlamm aus Kläranlagen mit einem Gehalt von 15 bis 50% an brennbaren Komponenten und/oder Schlamm aus der Kohleflotation, der bis zu 32% Kohle enthält, in einer Menge von 30 bis 70% gemischt wird, und das erhaltene Gemisch in Form einer dicken Paste zu Granulaten mit einer Länge von 2 bis 20 mm granuliert wird, die dann getrocknet und anschließend bei einer Temperatur von 1000 bis 1200°C für eine Zeitspanne zwischen 0,5 und 2 Stunden bis zur Stabilisierung der gefährlichen Stoffen durch das Einbringen in die polykristalline Struktur des Sinters mit den Eigenschaften eines Leichtzuschlages wärmebehandelt werden.

2. Das Verfahren nach Anspruch 1, in dem die Abfälle in Form von Feinstäuben aus der Verbrennungsanlage, Silikatstaub und Glasstaub mit einem Wassergehalt von bis zu 5% vorgemischt werden und dann der Abfallschlamm und/oder Schlamm aus der Kohleflotation mit einem Wassergehalt von 50 bis 85% zugegeben wird und alle Komponenten vermischt werden, bis eine homogene Mischung zur Granulatbildung erhalten wird.

3. Das Verfahren nach Anspruch 1 oder 3, in dem die gefährlichen Stoffe aus gefährlichen Abfällen als Ergebnis einer Festkörperreaktion in dem resultierenden leichten Aggregat in Form von stabilen Silikatverbindungen stabilisiert werden.

4. Das Verfahren nach Anspruch 1 oder 2, in dem die brennbaren Bestandteile des Klärschlammes und/oder Schlammes nach der Kohleflotation während der Sinterstufe ausbrennen und Gase erzeugen, die die Bildung von Poren im Granulat verursachen.

5. Das Verfahren nach Anspruch 4, in dem das Sintern von getrocknetem Granulat in einem Drehofen durchgeführt wird, der mit einem Reinigungssystem für Reaktionsgase ausgestattet ist.

6. Das Verfahren zur Entsorgung und Verwertung des Schlammes aus der Flotationsanreicherung von Nichteisenmetallerzen, die gefährliche Stoffe enthalten, bei der Herstellung von Leichtzuschlagstoffen für die Bauindustrie, wobei das erzeugte Aggregat im Prozess der Feststoffreaktion einer feinkörnigen natürlichen Kieselsäure erzeugt wird, die der Abfall ist, der beim Spülen von Sand für die Bauindustrie erzeugt wird, wobei der vorgenannte Schlamm auch Kieselsäure als Hauptkomponente enthält und als gefährlicher Abfall qualifiziert ist, worin der Schlamm aus der Flotationsanreicherung von Nichteisenmetall-Erzfraktionen von weniger oder gleich 0,2 mm mit feinkörnigen natürlichen Kieselsäurefraktionen von weniger oder gleich 0,063 mm gemischt wird, wobei der Anteil der gefährlichen Abfälle in dem Gemisch 5 bis 100% beträgt, und dann das resultierende Produkt in einer Menge von 30 bis 70% mit teilchenförmigem Glasabfall in Form von Staub von weniger oder gleich 0,2 mm in einer Menge von 2 bis 15% und Klärschlamm aus Kläranlagen mit einem Gehalt von 15 bis 50% an brennbaren Komponenten und/oder Schlamm aus der Kohleflotation, der bis zu 32% Kohle enthält, in einer Menge von 30 bis 70% gemischt wird, und das erhaltene Gemisch in Form einer dicken Paste zu Granulaten mit einer Länge von 2 bis 20 mm granuliert wird, die dann getrocknet und anschließend bei einer Temperatur von 1000 bis 1200°C für eine Zeitspanne zwischen 0,5 und 2 Stunden bis zur Stabilisierung der gefährlichen Stoffen durch Einbringen in die polykristalline Struktur des Sinters mit den Eigenschaften eines Leichtzuschlages wärmebehandelt werden.

7. Das Verfahren nach Anspruch 6, in dem die Abfälle in Form von Schlamm aus der Flotationsanreicherung von Nichteisenmetallerzen, Silikatstaub und Glasstaub mit einem Wassergehalt von bis zu 5% vorgemischt werden und dann der Abfallschlamm und/oder Schlamm aus der Kohleflotation mit einem Wassergehalt von 50 bis 85% zugegeben wird und alle Komponenten gemischt werden, bis eine homogene Mischung zur Granulatbildung erhalten wird.

8. Das Verfahren nach Anspruch 6 oder 7, in dem die gefährlichen Stoffe aus gefährlichen Abfällen als Ergebnis einer Festkörperreaktion in dem resultierenden leichten Aggregat in Form von stabilen Silikatverbindungen stabilisiert werden.

9. Das Verfahren nach Anspruch 6 oder 7, in dem die brennbaren Bestandteile des Klärschlammes und/oder Schlammes nach der Kohleflotation während der Sinterstufe ausbrennen und Gase erzeugen, die die Bildung von Poren im Granulat verursachen.

10. Das Verfahren nach Anspruch 9, in dem das Sintern von getrocknetem Granulat in einem Drehofen durchgeführt wird, der mit einem Reinigungssystem für Reaktionsgase ausgestattet ist.

## Revendications

1. Une méthode d'élimination et d'utilisation des poussières provenant de l'installation d'incinération contenant des substances dangereuses, dans le processus de la production d'agrégat léger pour l'industrie de la construction, au moyen de laquelle l'agrégat produit est généré dans le processus de la réaction à l'état solide d'une silice naturelle à grains fins qui constitue les déchets générés lors du rinçage du sable pour l'industrie de la construction, les poussières susmentionnées contenant la silice constituant l'élément principal et qualifiée comme déchets dangereux, dans laquelle la fraction de poussière de l'installation de combustion qui est inférieure ou égale à 0,2 mm est mélangée avec la fraction de silice naturelle à grains fins qui est inférieure ou égale à 0,063 mm,
dans laquelle la teneur en déchets dangereux dans le mélange est comprise entre 5 et 100%, et puis le produit obtenu, en une quantité de 30 à 70%, est mélangé avec des déchets de verre particulaire sous forme de poussière inférieure ou égale à 0,2 mm en une quantité de 2 à 15% et des boues de déchets provenant d'installations de traitement des eaux usées avec une teneur de 15 à 50% de composants combustibles et/ou de boues provenant de la flottation du charbon contenant jusqu'à 32% de charbon, en une quantité de 30 à 70%, et le mélange résultant sous forme d'une pâte épaisse est granulé pour former des granulés d'une longueur allant de 2 à 20 mm, qui sont ensuite séchés et subissent par la suite un traitement thermique à une température allant de 1000 à 1200°C pour une durée comprise entre 0,5 et 2 heures, jusqu'à la stabilisation des substances dangereuses par incorporation dans la structure polycristalline du frittage aux propriétés d'un agrégat léger.

2. La méthode selon la revendication 1, dans laquelle les déchets sous forme de poussières fines provenant de l'installation de combustion, de poussières de silice et de poussières de verre contenant jusqu'à 5% d'eau sont prémélangés, puis des boues de déchets et/ou des boues de flottation du charbon ayant une teneur en eau de 50 à 85 % sont ajoutées et tous les composants sont mélangés jusqu'à l'obtention d'un mélange homogène pour former des granulés.

3. La méthode selon la revendication 1 ou 3, dans laquelle les substances dangereuses provenant de déchets dangereux sont stabilisées en conséquence d'une réaction à l'état solide dans l'agrégat léger résultant sous forme de composés de silicate stables.

4. La méthode selon la revendication 1 ou 2, dans laquelle les composants combustibles des boues d'épuration et/ou des boues après la flottation du charbon brûlent pendant la phase de frittage, produisant des gaz qui provoquent la formation de pores dans les granulés.

5. La méthode selon la revendication 4, dans laquelle le frittage de granulés séchés est effectué dans un four rotatif équipé d'un système de nettoyage pour les gaz de réaction.

6. Une méthode d'élimination et d'utilisation des boues provenant de l'enrichissement par flottation des minerais de métaux non ferreux contenant des substances dangereuses, dans le processus de la production d'agrégat léger pour l'industrie de la construction, au moyen de laquelle l'agrégat produit est généré dans le processus de la réaction à l'état solide d'une silice naturelle à grains fins qui constitue les déchets générés lors du rinçage du sable pour l'industrie de la construction, les boues susmentionnées aussi contenant la silice constituant l'élément principal et qualifiée comme déchets dangereux, dans laquelle les boues provenant de l'enrichissement par flottation de fractions de minerais de métaux non ferreux inférieures ou égales à 0,2 mm sont mélangées avec une fraction de silice naturelle à grains fins inférieure ou égale à 0,063 mm, dans laquelle la teneur en déchets dangereux dans le mélange est comprise entre 5 et 100%, et puis le produit résultant, en une quantité de 30 à 70%, est mélangé avec des déchets de verre particulaire sous forme de poussière inférieure ou égale à 0,2mm en une quantité de 2 à 15% et des boues de déchets provenant d'installations de traitement des eaux usées avec une teneur de 15 à 50% de composants combustibles et/ou de boues provenant de la flottation du charbon contenant jusqu'à 32% de charbon, en une quantité de 30 à 70%, et le mélange résultant sous forme d'une pâte épaisse est granulé pour former des granulés d'une longueur allant de 2 à 20 mm, qui sont ensuite séchés et subissent par la suite un traitement thermique à une température allant de 1000 à 1200°C pour une durée comprise entre 0,5 et 2 heures, jusqu'à la stabilisation des substances dangereuses par incorporation dans la structure polycristalline du frittage aux propriétés d'un agrégat léger.

7. La méthode selon la revendication 6, dans laquelle les déchets sous forme de boues provenant de l'enrichissement par flottation des minerais de métaux non ferreux, de poussières de silice et de poussières de verre contenant jusqu'à 5% d'eau sont prémélangés, puis des boues de déchets et/ou des boues de flottation du charbon ayant une teneur en eau de 50 à 85% sont ajoutées et tous les composants sont mélangés jusqu'à l'obtention d'un mélange homogène pour former des granulés.

8. La méthode selon la revendication 6 ou 7, dans laquelle les substances dangereuses provenant de déchets dangereux sont stabilisées en conséquence d'une réaction à l'état solide dans l'agrégat léger résultant sous forme de composés de silicate stables.

9. La méthode selon la revendication 6 ou 7, dans laquelle les composants combustibles des boues d'épuration et/ou des boues après la flottation du charbon brûlent pendant la phase de frittage, produisant des gaz qui provoquent la formation de pores dans les granulés.

10. La méthode selon la revendication 9, dans laquelle le frittage de granulés séchés est effectué dans un four rotatif équipé d'un système de nettoyage pour les gaz de réaction.
